# EUROPÄISCHE PATENTANMELDUNG

(11) **EP 1 187 009 A2**
(43) Veröffentlichungstag der Anmeldung: **13.03.2002**
(21) Anmeldenummer: 01440188.9
(22) Anmeldetag: 22.06.2001
(51) Int. Cl.: G06F 9/44

(54) **Verfahren zum Erzeugen von Informationsmodellen**

(30) Priorität: 12.07.2000 DE 10033812
(71) Anmelder: ALCATEL, 75008 Paris (FR)
(72) Erfinder: Grosshart, Martin, D-70178 Stuttgart (DE); Meyer, Ingo, D-70435 Stuttgart (DE); Martmann, Ralf, D-70806 Kornwestheim (DE)
(74) Vertreter: Zinsinger, Norbert

(57) **Zusammenfassung**

Die Erfindung betrifft ein Verfahren zum Erzeugen von Informationsmodellen sowie ein Informationsverarbeitungssystem und ein Softwareprodukt zur Durchführung des Verfahrens. Ein erstes Master-Informationsmodell kodiert in einer ersten Beschreibungssprache wird generiert und in einer Datenbank abgespeichert. Aus dem Master-Informationsmodell werden mittels erster Selektionsparameter ein oder mehrere zweite produktspezifische Informationsmodelle erzeugt und jeweils in einer Datenbank abgespeichert.

## Beschreibung

Die Erfindung betrifft Verfahren zum Erzeugen von Informationsmodellen sowie Informationsverarbeitungssysteme und Softwareprodukte zur Durchführung solcher Verfahren.

Üblicherweise wird für jedes zu entwickelnde Softwareprodukt ein individuelles, spezifisches Informationsmodell entwickelt. Dieses Informationsmodell dient sodann als Vorlage für die Software-Entwickler, die dann gemäß den Vorgaben dieses spezifischen Informationsmodells die Software für das zu schaffende Produkt kodieren.

Der Erfindung liegt nun die Aufgabe zugrunde, die Entwicklung von Softwareprodukten zu beschleunigen.

Diese Aufgabe wird gelöst durch Verfahren nach der Lehre der Ansprüche 1 und 7 sowie durch Informationsverarbeitungssystem und Softwareprodukte nach der Lehre der Ansprüche 10 bzw. 11.

Hierdurch ergeben sich folgende Vorteile: Die Verteilung der Entwicklung über verschiedene Standorte wird unterstützt. Die Inkonsistenz von Informationsmodellen kann in einem frühen Stadium der Produktentwicklung erkannt werden und effektiv beseitigt werden. Weitere Vorteile ergeben sich bei der Veränderung von Anforderungen an Produkte oder einer inkrementellen Produktentwicklung. Die notwendigen Produktanpassungen können schnell und effektiv lokalisiert werden. Weiter wird eine automatische Erstellung angepaßter Softwarekomponenten ermöglicht.

Vorteilhafte Ausgestaltungen der Erfindung sind den Unteransprüchen zu entnehmen.

Im folgenden wir die Erfindung anhand mehrerer Ausführungsbeispiele unter Zuhilfenahme beiliegender Zeichnungen beispielhaft erläutert.
- Fig. 1: zeigt ein Blockschaltbild eines Netzwerkmanagementsystems
- Fig. 2: zeigt eine funktionelle Darstellung eines erfindungsgemäßen Informationsverarbeitungssystem.
- Fig. 3: zeigt eine funktionelle Darstellung einer Teilfunktion des erfindungsgemäßen Informationsverarbeitungssystems nach Fig. 2.
- Fig. 4: zeigt die Darstellung eines Produkt-Profils.

In Netzwerkmanagement Architekturen werden Informationsmodelle verwendet, um die Management-Schnittstellen zwischen den Systemen und innerhalb der Systeme eines durch das Netzwerkmanagementsystem verwalteten Netzwerks zu spezifizieren.

Die Informationsmodelle werden in einer normierten Beschreibungssprache kodiert. Solche Beschreibungssprachen sind beispielsweise ASN.1/ GDMO (siehe ITU-T X.722 und X.208), SNMP oder IDL/CORBA. Die Informationsmodelle definieren hierbei den Typ der zwischen den Systemen ausgetauschten Informationen. Grundsätzlich können die verschiedenen in einem Netzwerkmanagementsystem integrierten Systeme in eine Vielzahl von unterschiedlichen Typen von Netzelementen und in eine Vielzahl von unterschiedlichen Typen von Netzwerk Managern und Betriebssystemen eingeteilt werden, die unterschiedliche Netzwerkmanagement Ebenen implementieren. Es ist natürlich auch möglich, daß mittels eines Informationsmodells auch andere Systeme, beispielsweise Verkehrsleitsysteme oder e-commerce Systeme beschrieben werden. Auch auf diese Informationsmodelle ist die Erfindung anwendbar.

Im folgenden wird die Durchführung der erfindungsgemäßen Verfahren und die Funktionsweise eines erfindungsgemäßen Systems und Softwareprodukt anhand von Informationsmodellen im Bereich von Netzwerkmanagementsystemen beispielhaft erläutert.

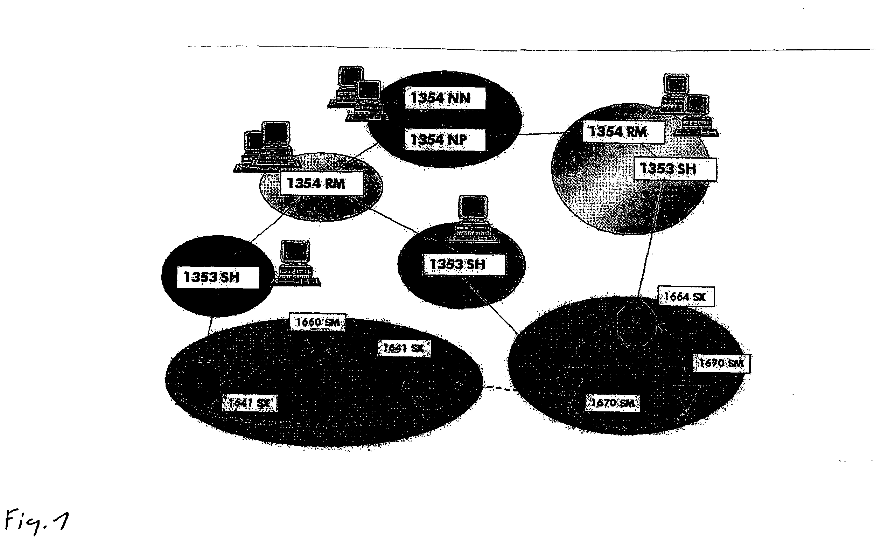

Fig. 1 zeigt beispielhaft die Architektur eines Netzwerkmanagementsystems für ein SDH Kommunikationsnetz. Es weist Digitale Cross Connects (1641SX, 1664SX), Add/Drop Multiplexer (1660SM, ..) als Netzelemente auf. Auf dem Element Manager Level werden Gruppen von Netzelementen von Managern (1354RM) gesteuert und kontrolliert, die ihrerseits wiederum von weiteren Managern (1354RM, 1354NN, 1354NP, 1354RM) gesteuert und kontrolliert werden.

Die Informationsmodelle beschreiben hierbei die Schnittstellen zwischen den Manager Applikationen und den Agents. Ein Manager sendet eine Anforderung, die in einem vordefinierten Format (z. B CMISE über CMIP) konstruiert ist zu dem Agent und der Agent bearbeiten diese Anforderung. Um die Managementfähigkeit eines Agents zu beschreiben, wird ein objektorientierter Ansatz für die Beschreibungssprache verwendet, mittels der Informationssystems beschrieben werden. Innerhalb der Beschreibungssprache werden Objektklassen verwendet. Der Agent hält während des Betriebs Instances von solchen Objektlassen, die die soge. Management Information Base (MIB) bilden.

Eine Objektklasse enthält hierbei Vererbungen von anderen Objektklassen und eine Sammlung von Paketen. Jedes Packet enthält selbst Attribute und Operationen auf diesen Attributen. Weiter können "Notifikations" und "Actions" innerhalb der Packele spezifiziert werden. Um die Eigenheiten der Hardware unterschiedlicher Hersteller in Betracht zu ziehen, kann diese als Bedingung für einer bestimmte Objektklasse festgelegt werden. Dies bedeutet, daß diese Objektklassen nicht in allen Fällen vorhanden sein müssen. Im Gegensatz dazu gibt es aber auch Pakete, die Funktionalitäten repräsentieren, die immer vorhanden sein müssen wenn ein Instance einer Objektklasse erzeugt wird. Weiter definieren Namensgebungsregeln eine Vererbungs-Beziehung zwischen Objekten und der Benennung von Objekten.

Bei der Beschreibungssprache handelt es sich um die Beschreibungssprache ASN.1/ GDEMO, es können jedoch auch die anderen oben genannten Beschreibungssprachen verwendet werden.

Im folgenden wird nun ein Informationsverarbeitungssystem mit einem die im folgenden beschriebenen Funktionen des Informationsverarbeitungssystems steuernden Softwareprodukt beschrieben, das die Arbeit mit Informationsmodellen und die Erzeugung von Informationsmodellen unterstützt. Ein solches Softwareprodukt kann hierbei aus einem oder mehreren Applikationsprogrammen bestehen, die auf einer Systemplattform ablaufen, und die im folgenden beschriebenen Funktionen steuern. Es kann sich bei diesem Softwareprodukt aber auch um einen Datenträger handeln, auf dem dieses Applikationsprogramm oder diese Applikationsprogramme gespeichert sind. Eine Systemplattform besteht hierbei aus ein oder mehreren miteinander verbundenen Rechnern, die die Hardware-Plattform bilden, und einer darauf aufsetzenden Softwareplattform, beispielsweise einem Betriebsystem und einer Datenbank.

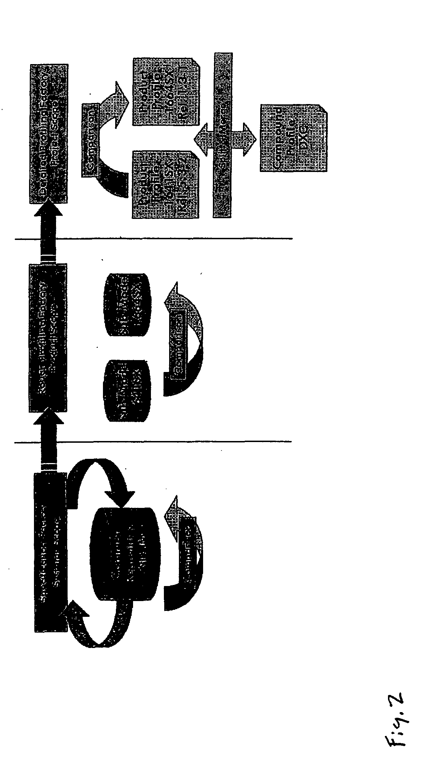

Die grundlegenden Funktionen des Informationsverarbeitungssystems sind in Fig. 2 dargestellt.

Der Grundgedanke des Konzepts besteht darin, eine einzige gemeinsame Quelle von Informationsmodell-Definitionen bereitzustellen. Dieses Master-Informationsmodell muß korrekt, komplett und konsistent sein. Es stellt die Managementspezifikationen für das gesamte Netzwerk zur Verfügung.

Aus dieser globalen Quelle werden nun durch einen "rough profiling" Prozess Untermodelle für jedes konkrete System oder Produkt extrahiert, das Teil des Netzwerkes ist. Dieses Unter-Modell enthält nur diejenigen Definitionen, die in dem Kontext des spezifischen Produktes relevant sind. In diesem Sinne bilden diese Untermodelle jeweils produktspezifische Informationsmodelle. Auch dieses Unter-Modelle müssen jeweils in sich korrekt, komplett und konsistent sein.

Ein produktspezifischen Unter-Modell wird nun durch einen "detailed profiling" Prozess derart weiterverfeinert, daß es die spezifischen Beschränkungen des spezifischen Produktes enthält. Unterstützte und nicht unterstützte Merkmale werden formal beschrieben, entweder für das Produkt im Allgemeinen oder für einen konkreten Entwicklungsschritt (Release) des Produktes. Die detaillierten Produkt Profile von mehreren Produkten können in einer detaillierten Beschreibung einer Gruppe von Produkten zusammengefaßt werden. Ebenso können Produkt Profile zusammengefaßter Systeme in die detaillierte Beschreibung der einzelnen Systeme zerlegt werden.

Komplette Informationsmodelle, "rough profiles" und "detailed profiles" können verglichen werden, um die Unterschiede zu extrahieren. Diese Unterschiede werden in einem graphischen Benutzer-Interface hervorgehoben, so daß der Benutzer die Unterschiede schnell erkennen kann. Die "detailed profiles" werden dazu verwendet, um Konformitätsaussagen nach ITU-T X.724 (MOCS) oder nach einem proprietären Format zu erzeugen. Aus den Informationsmodellen können weiter alle Arten von Dokumentationen sowie Softwarekomponenten für Netzelemente und Manager automatisch erzeugt werden. Ein Beispiel für eine solche Dokumentation ist eine HTML Darstellung des Informationsmodells, auf die mittels eines Browser zugegriffen werden kann.

Im Folgenden wird die detaillierte Funktionsweise des Informationsverarbeitungssystems beschrieben.

Die grundlegende Methode zur Erzeugung und Aufrechterhaltung der globalen Master-Informationsquelle besteht im Zerlegen der GDMO und ASN.1 Definitionen, die als ASCII Eingabefiles bereitstehen. Je nach der Komplexität des Gesamtsystems muß eine Vielzahl solcher Eingabefiles verarbeitet werden, die jeweils unterschiedliche Teil-Komponenten und Aspekte des Gesamtsystems definieren. Während des Zerlegens werden syntaktische Fehler an den Benutzer gemeldet. Die resultierende Quelle (Repository) wird auf Kompleffheit geprüft und es werden nicht aufgelöste Verknüpfungen zwischen Definitionen identifiziert. Konsistenz-Überprüfungen werden durchgeführt, um Typ-Inkonsistenzen zwischen dem GDMO und dem ASN. 1 Teil zu identifizieren. Sich wiedersprechende Spezifikationen aus verschiedenen Eingabefiles werden ermittelt, erkannt und dem Benutzer gemeldet.

Wenn der Zerlegungs-Prozess erfolgreich durchgeführt worden ist, so liegt als Ergebnis eine korrekte, komplette und konsistente Informationsmodell-Quelle für das gesamte Netzwerk vor. Wie in Fig. 2 dargestellt, bildet diese Informationsquelle die Basis für jede weitergehende Bearbeitung von Informationsmodellen.

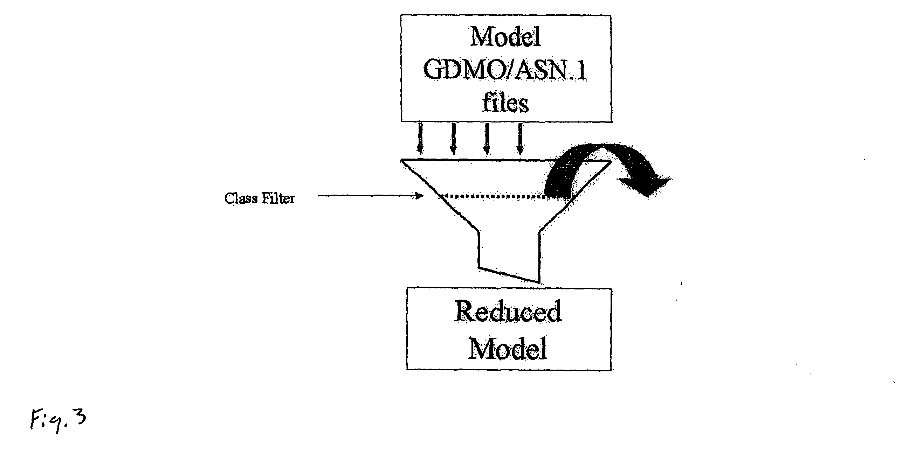

In dem "rough profiling" Prozess werden produktspezifische Profile aus dem globalen Master-Informationsmodell extrahiert. Der "rough profiling" Prozess ist in Fig. 3 dargestellt.

Ein spezifischen Produkt, beispielsweise ein Agent oder ein Manager implementiert nur eine Untermenge der Objektklassen, die in dem Master-Informationsmodel enthalten sind. Basierend auf einer List von Objektklassen, die instantizierbar sind, werden alle mit diesen verknüpften GDMO und ASN.1 Definitionen aus der Informationsmodell-Quelle rekursiv gesammelt. Das Ergebnis ist ein Unter-Modell, das alle relevanten Definitionen für ein spezifisches Produkt enthält. Dieses Unter-Modell wird auch als "rough profile" bezeichnet, Dieses "rough profile" wird als Grundlage für die weitere Verfeinerung der Produkt-Spezifikation verwendet. Es bildet auch die Grundlage für die die Entwicklung des spezifischen Produkts sowie für die Erzeugung von Software-Komponenten für das spezifische Produkt mittels Code-Generatoren. Aus dem "rough profile" werden weiter Dokumente erzeugt, die einen Überblick über die für das spezifische Produkt zusätzlich benötigten Funktionalitäten geben und auch als Grundlage von Verträgen mit Entwicklungs-Teams verwendet werden können. Aus dem "rough profile" kann weiter automatisch eine Abschätzung des Entwicklungsaufwandes für das spezifische Produkt erzeugt werden.

In dem "detailed profiling" Prozess werden unterstütze und nicht unterstützte Leistungsmerkmale spezifiziert und damit projektspezifische Informationsmodelle erzeugt.

Dieser Prozess erlaubt die weitere Verfeinerung der "rough profiles" in "detailed profiles". Unter Verwendung einer formalen Beschreibungs-Notation werden spezifische Verfeinerungen und Restriktionen für spezifische Produkte oder Produkt-Releases definiert. Eine Leistungsmerkmals-Liste, die gemäß dieser Notation abgefaßt ist, spezifiziert auf allen Ebenen der GDMO Struktur, welche Leistungsmerkmale (attributes, actions, notifications, ..) generell unterstützt werden oder nicht unterstützt werden. Beispielsweise kann in dieser Liste spezifiziert werden, daß ein bestimmtes, nicht zwingend notwendiges Paket (conditional packet) immer oder niemals durch das konkrete Produkt unterstützt wird. Spezielle Regeln können mittels Ausnahmen verfeinert werden. So kann beispielsweise ein Paket generell unterstützt werden, jedoch für ein bestimmte Objektklasse nicht unterstützt werden.

Diese Leistungsmerkmalslist wird in dem "detailed profiling" Prozess verwendet, um aus dem "rough profile" des Produkts eine synoptische Darstellung der instanzierbaren Objektklassen des produktspezifischen Informationsmodells zu erzeugen.

Aus einem produktspezifischen Informationsmodells wird somit mittels dieser Liste ein projektspezifisches Informationsmodell erzeugt, das nur diejenigen Objektklassen des produktbezogenen Informationsmodell enthält, die entsprechend der in der Liste enthaltenen Informationen instanzierbar sind. Zur Erzeugung des projektspezifisches Informationsmodells werden so diejenigen Objektklassen ermittelt, die nach der projektspezifischen Liste für das jeweilige Projekt instanzierbar sein sollen. Diese Objektklassen werden sodann aus dem produktspezifischen Informationsmodell extrahiert und so das projektspezifische Informationsmodell erzeugt.

Aus dem projektspezifischen Informationsmodell können mittels Code-Generatoren automatische Softwarekomponenten für das spezifische Produkt erzeugt werden. Weiter können aus dem projektspezifischen Informationsmodell auch ein, aber auch mehrere verschiedenartige Produkt Profile des spezifischen Produktes erzeugt werden. Ein Produkt Profil beschreibt die Eigenschaften eines spezifischen Produktes. Bei einem "detailed profile" handelt es sich um ein solches Produkt Profil.

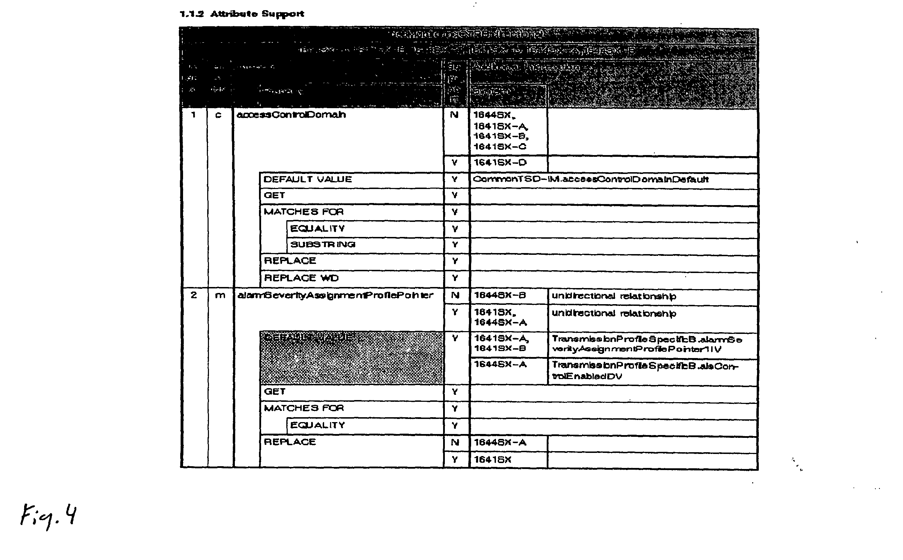

Das "detailed profile" ist eine spezifische Darstellung des projektspezifischen Informationsmodells das die instanzierbaren Objektklassen in einer synoptische Darstellung aufschlüsselt. Der Ausdruck "synoptisch" bedeutet in diesem Zusammenhang, daß die Vererbungsstrukturen der Objektklassen ignoriert werden und alle vererbten Leistungsmerkmale in einer kompletten Beschreibung der instanzierbaren Klassen gesammelt werden. Dies ermöglicht es, einen kompletten Überblick über die unterstützen Leistungsmerkmale jeder implementierten Klasse des Produktes zu erzeugen. Fig. 4 zeigt beispielhaft einen Ausschnitt aus einem "detailed Profile". Es ist auch möglich, ein "detailed profile" direkt aus einem produktbezogenen Informationsmodell zu erzeugen.

Es ist möglich, aus dem "detailed profile" Konformitäts-Aussagen zu erzeugen.

Das System unterstützt weiter vorteilhafterweise den Vergleich von Informationsmodellen und/ oder "detailed profiles".

Der Vergleich des Master-Informationsmodell mit den produktbezogenen Informationsmodellen wird durchgeführt um zu ermitteln, welche Produkte von einer Änderung des globalen Master-lnformationsmodells betroffen sind. Weiter wird ermittelt, welche Klasse von einer solchen Änderung betroffen sind (Vergleich auf Klassen-Ebene).

Der Vergleich von "detailed profiles" wird durchgeführt, um Unterschiede zwischen zwei Releases eines Produktes zu ermitteln oder um das geforderte Profile eines Produktes mit dem implementierten Profil des Produktes zu vergleichen. Die Unterschiede werden hierbei vorteilhafterweise von dem System durch unterschiedliche Farbwahl auf einer graphischen Benutzerschnittstelle kenntlich gemacht.

Leistungsmerkmals-Listen können für einzelne Systeme oder für eine Gruppe von Systemen erstellt werden. Ein mittels einer derartigen Liste erstelltes "detailed profile" für eine Gruppe von Systemen kann in die Produkt-Profile der Einzelsystem aufgesplittet werden. Umgekehrt können Produkt-Profile von Einzelsystem in einem Produkt-Profil für eine Gesamtsystem vereinigt werden.

## Patentansprüche

1. Verfahren zum Erzeugen von Informationsmodellen,
**dadurch gekennzeichnet, daß** ein erstes Master-Informationsmodell kodiert in einer ersten Beschreibungssprache generiert und in einer Datenbank abgespeichert wird und daß aus dem Master-Informationsmodell mittels erster Selektionsparameter ein oder mehrere zweite produktspezifische Informationsmodelle erzeugt und jeweils in einer Datenbank abgespeichert werden.

2. Verfahren nach Anspruch 1, **dadurch gekennzeichnet, daß** aus den ein oder mehrere zweiten produktbezogene Informationsmodelle mittels zweiter Selektionsparameter jeweils ein oder mehrere dritte projektspezifische Informationsmodelle erzeugt und jeweils in einer Datenbank abgespeichert werden.

3. Verfahren nach einem der obigen Ansprüche, **dadurch gekennzeichnet, daß** ein oder mehrere zweite produktspezifische Informationsmodelle erzeugt werden, die in einer von der ersten Beschreibungssprache unterschiedlichen zweiten Beschreibungssprache kodiert sind.

4. Verfahren nach einem der obigen Ansprüche, **dadurch gekennzeichnet, daß** die ein oder mehrere zweite produktspezifische Informationsmodelle Netzelemente eines Kommunikationsnetzes beschreiben.

5. Verfahren nach einem der obigen Ansprüche, **dadurch gekennzeichnet, daß** aus einem der ein oder mehreren zweiten produktspezifischen Informationsmodelle Softwarekomponenten für Netzelemente eines Kommunikationsnetzes erzeugt werden.

6. Verfahren nach einem der obigen Ansprüche, **dadurch gekennzeichnet, daß** aus einem der ein oder mehreren dritten projektspezifischen Informationsmodelle Softwarekomponenten für Netzelemente eines Kommunikationsnetzes erzeugt werden.

7. Verfahren zur Bearbeitung von Informationsmodellen,
**dadurch gekennzeichnet, daß** ein erstes Master-lnformationsmodell kodiert in einer ersten Beschreibungssprache generiert und in einer Datenbank abgespeichert wird und daß mittels des Master-lnformationsmodells ein oder mehrere Produkt-Profile oder ein Vergleich zwei oder mehrerer Produkt-Profile erzeugt und jeweils in einer Datenbank abgespeichert werden.

8. Verfahren nach einem der obigen Ansprüche, **dadurch gekennzeichnet, daß** aus dem Master-Informationsmodell mittels erster Selektionsparameter ein oder mehrere zweite produktspezifische Informationsmodelle erzeugt und jeweils in einer Datenbank abgespeichert werden und daß aus den ein oder mehreren zweiten produktspezifischen Informationsmodellen ein oder mehrere Produkt-Profile oder ein Vergleich zwei oder mehrerer Produkt-Profile erzeugt und jeweils in einer Datenbank abgespeichert werden.

9. Verfahren nach einem der obigen Ansprüche, **dadurch gekennzeichnet, daß** aus dem Master-Informationsmodell mittels erster Selektionsparameter ein oder mehrere zweite produktspezifische Informationsmodelle erzeugt und jeweils in einer Datenbank abgespeichert werden, daß aus den ein oder mehrere zweiten produktbezogene Informationsmodelle mittels zweiter Selektionsparameter jeweils ein oder mehrere dritte projektspezifische Informationsmodelle erzeugt und jeweils in einer Datenbank abgespeichert werden und daß aus den ein oder mehreren dritten projektspezifischen Informationsmodellen ein oder mehrere Produkt-Profile oder ein Vergleich zwei oder mehrerer Produkt-Profile erzeugt und jeweils in einer Datenbank abgespeichert werden.

10. Informationsverarbeitungssystem,
**dadurch gekennzeichnet, daß** es zur Durchführung des Verfahrens nach Anspruch 1 oder 7 ausgestaltet ist.

11. Softwareprodukt,
**dadurch gekennzeichnet, daß** es zur Durchführung des Verfahrens nach Anspruch 1 oder 7 ausgestaltet ist.
